# EUROPÄISCHE PATENTSCHRIFT

(11) **EP 3 831 716 B1**
(45) Veröffentlichungstag und Bekanntmachung des Hinweises auf die Patenterteilung: **07.06.2023**
(21) Anmeldenummer: 19212764.5
(22) Anmeldetag: 02.12.2019
(51) Int. Cl.: B64D 11/00, B64F 5/60

(54) **EINLEGEGEWICHT FÜR EINEN TROLLEY UND DESSEN VERWENDUNG IN FLUGZEUGEN**
INSTALLATION WEIGHT FOR A TROLLEY AND ITS USE IN AIRCRAFT
POIDS INSERT POUR CHARIOT ET SON UTILISATION DANS LES AÉRONEFS

(43) Veröffentlichungstag der Anmeldung: 09.06.2021
(73) Patentinhaber: AEROSNIP GmbH & Co. KG, 28203 Bremen (DE)
(72) Erfinder: SCHEIDHAUER, Nils, 28203 Bremen (DE)
(74) Vertreter: Simandi, Claus

(56) Entgegenhaltungen:
- CN-A- 110 262 475
- RU-C1- 2 073 618
- Onboard Logistics: "What is Flex-e-Drawer?", , 21. März 2016 (2016-03-21), Seite 1, XP054980511, Gefunden im Internet: URL:https://www.youtube.com/watch?v=CxvOwb fNAzY [gefunden am 2020-02-06]

## Beschreibung

Die Erfindung betrifft ein Einlegegewicht für einen Trolley und dessen Verwendung.

Trolleys sind verfahrbar und werden in ihrer in der Luftfahrt verwendeten Version vom Flugpersonal während des Fluges im Gang eines Flugzeuges zum Passagier geschoben, so dass dem Passagier Getränke, Mahlzeiten, Snacks, Artikel zum Zeitvertreib oder Waren an Bord des Flugzeugs an dessen Platz ausgehändigt werden können.

Ein Trolley (auch: Meal / Storage Trolley) ist daher eine Transportvorrichtung mit einem Transportraum umgebenen Wandelementen aufweisend eine Zuladung, wobei die Transportvorrichtung mittels angeordneten Rädern verfahrbar ausgebildet ist. Zudem kann ein Trolley jeweils endständig ein oder mehrere Türen aufweisen. Ferner sind in einem Trolley an den seitlichen Wandelementen horizontale Leisten ausgebildet, so dass Einschubmittel aufweisend eine Nut in den Transportraum des Trolleys eingebracht werden können. Die Einschubmittel können beispielsweise als Wanne oder Behälter ausgebildet ein. Solche Einschubmittel enthalten eine Zuladung. Durch das Zusammenwirken von Nut und Leiste ist das Einschubmittel im Transportraum des Trolleys fixiert.

Trolleys bestehen zumeist aus einem Verbund aus Pressfasermaterial oder Aluminiumblechen und wiegen im Leerzustand ca. 16-20 kg, wobei diese Trolleys eine Zuladung (supra) von 60-80 kg erfahren, so dass das Gesamtgewicht 76 - 100 kg betragen kann. Übliche Maße eines Trolleys sind 1050 mm (Höhe) x 301 mm (Breite) x 810 mm (Tiefe).

Im internationalen Luftverkehr sind die Ausmaße und Ausstattung dieser Trolleys standardisiert und normiert (Norm: ATLAS oder ACE). Die Trolleys finden an bestimmten Orten innerhalb der Flugzeugkabinen ihren Platz, beispielsweise während des Starts und der Landung.

Flugzeuge, insbesondere die Entwicklung von Flugzeugen, unterliegen hohen Anforderungen und Auflagen der zuständigen Behörden. Beispielsweise müssen Prototypen und Entwicklungen Extremfluglagen aushalten können als auch Testungen / Prüfungen über sich ergehen lassen. Nicht selten können Kräfte von 9 G und mehr wirken, mit hohen Belastungen für Material und Konstruktion der Flugzeuge.

Um die Flugeigenschaften eines Flugzeuges zu bestätigen, müssen nach der Herstellung und gegebenenfalls nach einer Modifikation oder Reparatur eines Flugzeuges, die Flugparameter während eines Test-bzw. Maintenance Check Flights bestätigt oder überprüft werden. Hierzu muss das Flugzeug unter anderem in einen vom Hersteller / STC Holder vorgegebenen Gewichtszustand gebracht werden ("Weight and Balance").

Um die vorgeschriebene Gewichtsverteilung zu erreichen, müssen bei einigen Flugzeugmustern hierfür Gewichte in den Bereichen der Trolleys, die überwiegend in den Flugzeugküchen (Galleys) positioniert werden, simuliert werden.

Diese Gewichte müssen einen, wie im normalen Flugbetrieb, gefüllten Trolley simulieren können. In den Trolleys sind die Gewichte exakt in der Weise zu positionieren, dass eine gleichmäßige Gewichtsverteilung innerhalb der Trolleys gewährleistet wird, ohne die Trolley-Struktur zu überlasten.

Das Gesamtgewicht der gefüllten Trolleys ist der gültigen Flugzeugdokumentation zu entnehmen.

Es besteht die Notwendigkeit ein Flugzeug in seiner Gesamtheit der Gewichte auszutarieren, wobei ebenfalls der Trolley mit seinem Gewicht samt Zuladungsgewicht zu berücksichtigen ist.

Die vorliegende Erfindung stellt sich daher der Aufgabe, einen beladenen Trolley zu simulieren, sodass eine Testung / Prüfung mit einem üblich verteilten Zuladungsgewicht erfolgen kann.

Im Stand der Technik ist allenfalls das Beschweren der Trolleys mit Sandsäcken bekannt. Jedoch führt diese Maßnahme zu Unwägbarkeiten mangels hinreichender Fixierung. Zudem soll eine gleichmäßige Gewichtsverteilung im gesamten Transportraum des Trolleys erfolgen können.

Der Erfinder konnte nunmehr überraschender Weise zeigen, dass ein Einlegegewicht (1) für einen Trolley aufweisend jeweils längsseitig eine Nut (2a, 2b), welche über die Leisten (4) der seitlichen Wandelemente (5) in den Transportraum (3) aufgenommen werden kann, eine geeignete Lösung der Aufgabe darstellt. Wie bei den bekannten Einschubmitteln (supra) wird ein Zusammenwirken von Nut und Leiste erreicht, so dass die Nut und Leiste miteinander schließen.

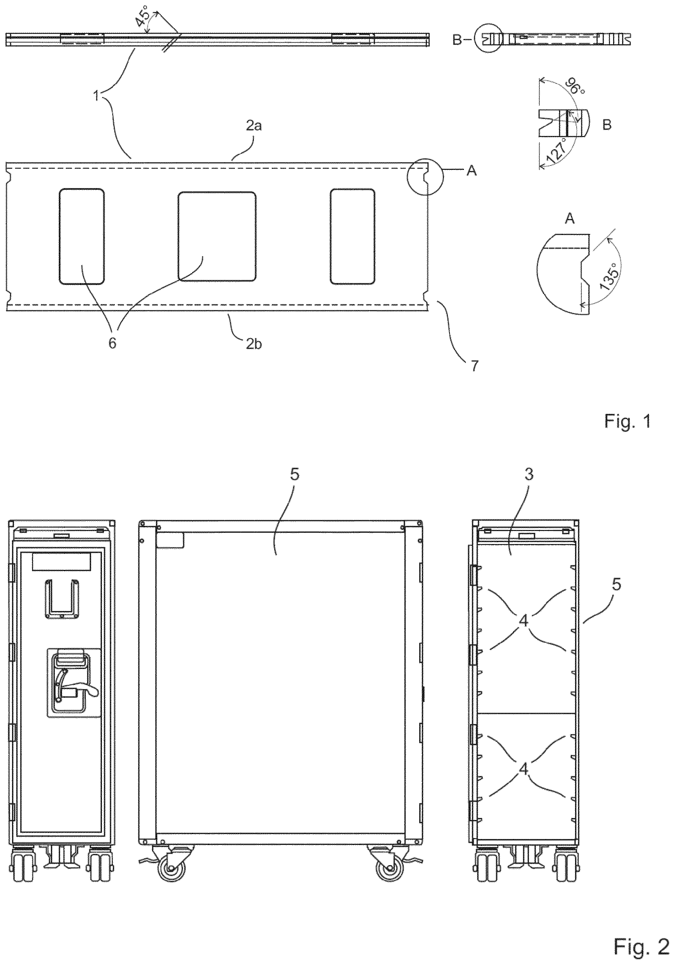

Im Sinne dieser Erfindung ist eine Nut (2, siehe auch B in Figur 1) eine längliche Vertiefung jeweils entlang der Längsseiten des Einlegegewichtes. Die Nut kann in einem Stück oder in mehreren Stücken ausgebildet sein.

Eine Leiste (4) im Sinne dieser Erfindung ist ein geeignetes Befestigungselement jeweils an den seitlichen Wandelementen (5) des Trolleys, welches aus dem jeweiligen Wandelement in den Transportraum ragt oder hinaussteht, so dass die jeweilige Nut (2a, 2b - supra) in die Leiste (4) greifen kann. Die Leiste kann in einem Stück oder in mehreren Stücken ausgebildet sein.

Das erfindungsgemäße Einlegegewicht für einen Trolley dient zur Verwendung in einem Flugzeug, insbesondere zur Simulation eines beladenen Trolleys, insbesondere zum Austarieren eines Flugzeugs.

Erfindungsgemäss ist das Einlegegewicht in der Form eines flachen Bretts, insbesondere eines Kunststoffbretts, ausgebildet. Insbesondere ist bevorzugt, dass das Einlegegewicht ein oder mehrere Aussparungen (6) aufweist, so dass es leicht und sicher in die Hand genommen und bewegt werden kann.

Weiterhin ist bevorzugt, dass ein Einlegegewicht vorzugsweise bis zu 5 kg umfasst, wobei üblicherweise bis zu 12 Einlegegewichte in einem Trolley aufgenommen werden können. Daher ist bevorzugt, dass eine Dichte von mehr als 1,3 g/cm³ in einem erfindungsgemäßen Einlegegewicht erreicht wird.

Das Einlegewicht ist vorzugsweise einteilig in einem Kunststoff ausgebildet. Daher sind solche Polymere oder Kunststoffe bevorzugt, die vorstehend eine Dichte von mehr als 1,3 g/cm³ erreichen, wie Polyoxymethylen (POM), Polybutylenterephthalat (PBT), Polyvinylchlorid (PVC), Polytetrafluorethylen (PTFE), u.a.

Die Ausgestaltung der Einlegegewichte mit den genannten Polymeren erlaubt zudem vorteilhaft eine hohe Abriebfestigkeit, hohe Zug-, Druck- und Biegefestigkeit, eine geringe Feuchteaufnahme, eine hohe Säurebeständigkeit als auch eine hohe Temperaturbeständigkeit.

Ferner ist bevorzugt, dass die Einlegegewichte eine Länge 780 mm x Breite 275 mm x Höhe 20 mm aufweisen und so gestaltet sind, dass der Transportraum (3) horizontal, entlang den Leisten (4) - vollständig ausgefüllt werden kann. Dies führt zu einer vorteilhaften gleichmäßigen Gewichtsverteilung im Trolley.

Weiterhin weist das Einlegegewicht (1) an jeder Seitenbreite zwei Ausschnitte (7, siehe auch A in Figur 1) auf, sodass die herausragende Spannleiste der Trolley-Tür im geschlossenen Zustand umfasst werden kann und ein Anpress-Moment erreicht wird, und zwar vorteilhaft unabhängig davon, welche Oberfläche des eingebrachten Einlegegewichts oben oder unten ist. Dies dient zur vorteilhaften Fixierung des eingebrachten Einlegegewichts in den Transportraum.

Weiterhin betrifft die Erfindung ein Set von erfindungsgemäßen Einlegegewichten, so dass ein oder mehrere Trolleys leicht bestückt werden können. Beispielsweise kann ein Trolley bis zu 12 Einlegegewichte aufnehmen und auf diese Weise bestückt werden.

In den Figuren ist die Erfindung näher erläutert.
Figur 1 zeigt ein erfindungsgemäßes Einlegegewicht (1) aufweisend eine Nut (2a, 2b bzw. "B") mit einem Nutwinkel von 45 Grad samt Aussparungen (6) und Ausschnitte (7, bzw. "A").
Figur 2 zeigt einen Trolley (auch: Meal / Storage Trolley) von links nach rechts, nämlich geschlossene Ansicht, Ansicht mit seitlichen Wandelementen (5) und offen mit Zugang zum Transportraum (3) und Leisten (4).

### Figurenlegende:

1 Einlegegewicht
2a, 2b Nut
3 Transportraum
4 Leisten
5 Seitliche Wandelemente
6 Aussparungen
7 Ausschnitte

## Patentansprüche

1. Einlegegewicht (1) in Form eines flachen Bretts für einen Trolley zur Verwendung in einem Flugzeug aufweisend jeweils längsseitig eine Nut (2a, 2b), welche geeignet sind, über die Leisten (4) der seitlichen Wandelemente (5) in den Transportraum (3) des Trolleys aufgenommen zu werden.

2. Einlegegewicht (1) in Form eines flachen Bretts für einen Trolley zur Verwendung in einem Flugzeug nach Anspruch 1, **dadurch gekennzeichnet, dass** das Einlegegewicht (1) ein e oder mehrere Aussparungen (6) aufweist.

3. Einlegegewicht (1) in Form eines flachen Bretts für einen Trolley zur Verwendung in einem Flugzeug nach einem der vorhergehenden Patentansprüche, **dadurch gekennzeichnet, dass** das Einlegegewicht einteilig in einem Kunststoff ausgebildet ist.

4. Einlegegewicht (1) in Form eines flachen Bretts für einen Trolley zur Verwendung in einem Flugzeug nach einem der vorhergehenden Patentansprüche, **dadurch gekennzeichnet, dass** die Dichte gleich oder mehr als 1,3 g/cm³ beträgt und, sofern der Anspruch abhängig von Anspruch 3 betrachtet wird, der Kunststoff ausgewählt ist aus der Gruppe Polyoxymethylen (POM), Polybutylenterephthalat (PBT), Polyvinylchlorid (PVC) oder Polytetrafluorethylen (PTFE).

5. Einlegegewicht (1) in Form eines flachen Bretts für einen Trolley zur Verwendung in einem Flugzeug nach Anspruch 4, **dadurch gekennzeichnet, dass** die Masse des Einlegegewichts 5 kg beträgt.

6. Einlegegewicht (1) in Form eines flachen Bretts für einen Trolley zur Verwendung in einem Flugzeug nach einem der vorhergehenden Patentansprüche, **dadurch gekennzeichnet, dass** das Einlegegewicht an jeder Seitenbreite zwei Ausschnitte (7) aufweist, sodass die herausragende Spannleiste der Trolley-Tür im geschlossenen Zustand umfasst werden kann.

7. Verwendung eines Einlegegewichts (1) für einen Trolley in einem Flugzeug zur Simulation eines beladenen Trolleys und zum Austarieren der Gesamtheit der Gewichte eines Flugzeugs, aufweisend jeweils längsseitig eine Nut (2a, 2b), welche geeignet sind, über die Leisten (4) der seitlichen Wandelemente (5) in den Transportraum (3) des Trolleys aufgenommen zu werden.

8. Verwendung eines Einlegegewichts (1) für einen Trolley nach Anspruch 7, wobei das Flugzeug in einen vom Hersteller vorgegebenen Gewichtszustand gebracht wird.

9. Set zum Bestücken eines Trolleys umfassend ein oder mehrere Einlegegewichte für einen Trolley nach einem der Ansprüche 1 - 6.

## Claims

1. Weighted insert (1) in the form of a flat board for a trolley for use in an aircraft, comprising a groove (2a, 2b) on each longitudinal side that is suitable for being received in the transport space (3) in the trolley via the rails (4) of the lateral wall elements (5).

2. Weighted insert (1) in the form of a flat board for a trolley for use in an aircraft according to claim 1, **characterized in that** the weighted insert (1) comprises one or more cut-outs (6).

3. Weighted insert (1) in the form of a flat board for a trolley for use in an aircraft according to any one of the preceding claims, **characterized in that** the weighted insert is formed in one piece from a plastics material.

4. Weighted insert (1) in the form of a flat board for a trolley for use in an aircraft according to any one of the preceding claims, **characterized in that** the density is greater than or equal to 1.3 g/cm³ and, if this claim is considered to be dependent on claim 3, the plastics material is selected from the group of polyoxymethylene (POM), polybutylene terephthalate (PBT), polyvinyl chloride (PVC), or polytetrafluorethylene (PTFE).

5. Weighted insert (1) in the form of a flat board for a trolley for use in an aircraft according to claim 4, **characterized in that** the mass of the weighted insert is 5 kg.

6. Weighted insert (1) in the form of a flat board for a trolley for use in an aircraft according to any one of the preceding claims, **characterized in that** the weighted insert comprises two indentations (7) on each side width, such that they can fit around the clamping rail protruding from the trolley door when it is closed.

7. Use of a weighted insert (1) for a trolley in an aircraft for simulating a loaded trolley and for balancing out the overall weights of an aircraft, comprising a groove (2a, 2b) on each longitudinal side that is suitable for being received in the transport space (3) in the trolley via the rails (4) of the lateral wall elements (5).

8. Use of a weighted insert (1) for a trolley according to claim 7, wherein the aircraft is brought into a weighted state as predetermined by the manufacturer.

9. Set for equipping a trolley, comprising one or more weighted inserts for a trolley according to any one of claims 1-6.

## Revendications

1. Poids de lestage (1) sous forme d'une planche plane pour un chariot à utiliser dans un avion, présentant respectivement, du côté longitudinal, une rainure (2a, 2b), laquelle est appropriée pour être reçue dans l'espace de transport (3) du chariot par le biais des barres (4) des éléments de paroi (5) latéraux.

2. Poids de lestage (1) sous la forme d'une planche plane pour un chariot à utiliser dans un avion selon la revendication 1, **caractérisé en ce que** le poids de lestage (1) présente un ou plusieurs évidements (6).

3. Poids de lestage (1) sous la forme d'une planche plane pour un chariot à utiliser dans un avion selon l'une des revendications précédentes, **caractérisé en ce que** le poids de lestage est conçu d'un seul tenant dans une matière plastique.

4. Poids de lestage (1) sous la forme d'une planche plane pour un chariot à utiliser dans un avion selon l'une des revendications précédentes, **caractérisé en ce que** la masse volumique est égale ou supérieure à 1,3 g/cm³, et, dans la mesure où la revendication est considérée comme dépendante de la revendication 3, la matière plastique est choisie dans le groupe du poly oxy méthylène (POM), du poly butylène téréphtalate (PBT), du polyvinyl chlorure de vinyle (PVC) ou du poly tétra fluoro éthylène (PTFE).

5. Poids de lestage (1) sous la forme d'une planche plane pour un chariot à utiliser dans un avion selon la revendication 4, **caractérisé en ce que** la masse du poids de lestage est de 5 kg.

6. Poids de lestage (1) sous la forme d'une planche plane pour un chariot à utiliser dans un avion selon l'une des revendications précédentes, **caractérisé en ce que** le poids de lestage présente deux découpes (7) sur chaque largeur latérale de sorte que la barre de serrage protubérante du chariot puisse être saisie dans l'état fermé.

7. Utilisation d'un poids de lestage (1) pour un chariot dans un avion pour la simulation d'un chariot chargé et pour effectuer une tare de la totalité des masses d'un avion, présentant, respectivement du côté longitudinal, une rainure (2a, 2b), laquelle est appropriée pour être reçue dans l'espace de transport (3) du chariot sur les barres (4) des éléments de paroi (5) latéraux.

8. Utilisation d'un poids de lestage (1) pour un chariot selon la revendication 7, où l'avion est porté à un poids prédéterminé par le fabricant.

9. Ensemble de compartimentation d'un chariot comprenant un ou plusieurs poids de lestage pour un chariot selon l'une des revendications 1 à 6.
